# EUROPEAN PATENT APPLICATION

(11) **EP 2 977 897 A1**
(43) Date of publication of application: **27.01.2016**
(21) Application number: 14767779.3
(22) Date of filing: 21.01.2014
(51) Int. Cl.: G06F 9/48

(54) **COMPATIBILITY METHOD AND APPARATUS**

(30) Priority: 19.03.2013 CN 201310088109
(71) Applicant: Huawei Technologies Co., Ltd., Longgang District Shenzhen, Guangdong 518129 (CN)
(72) Inventor: TAN, Chongkang, Beijing 100190 (CN)
(74) Representative: Thun, Clemens
(86) International application number: PCT/CN2014/070961
(87) International publication number: WO 2014/146508

(57) **Abstract**

Embodiments of the present invention provide a compatibility method and apparatus, which relate to the computer field, can support ABI compatibility of multiple operating systems and an existing ABI compatibility technology, and facilitate further extension of multiple ABI compatibility technologies. The compatibility method includes: if a first target program is a locally registered target program, creating a first process for the first target program; performing remapping on the first target program to generate a remapping table, where the remapping table indicates a correspondence between the first target program and the remapped first target program; loading the remapped first target program into a local memory corresponding to the first process, so as to generate an image of the remapped first target program; performing reconstruction on the image; and determining a redirection interface of the reconstructed image, so as to execute the first process.

## Description

This application claims priority to Chinese Patent Application No.201310088109.0, filed with the Chinese Patent Office on March 19, 2013 and entitled "COMPATIBILITY METHOD AND APPARATUS", which is incorporated herein by reference in its entirety.

### TECHNICAL FIELD

The present invention relates to the computer field, and in particular, to a compatibility method and apparatus.

### BACKGROUND

In a data center operating system, a direct way to solve multiple remaining application program problems is to use an ABI (Application Binary Interface, application binary interface) compatibility technology. The ABI compatibility technology refers to simulation, in a host operating system, of a binary environment in which a target program may be executed. When the ABI compatibility technology is used, the target program may be executed in the corresponding host operating system without being modified.

The ABI compatibility technology used at present mainly includes a system level ABI compatibility technology and a process level ABI compatibility technology. The system level ABI compatibility technology refers to simulation, in the host operating system by means of a virtual machine, a virtual environment in which the target program may be executed. The process level ABI compatibility technology refers to simulation in the host operating system, by means of a dynamic link, of a virtual environment in which the target program may be executed.

The ABI compatibility technology in the prior art is to add, into the operating system of the host computer according to an operating system of the target program, the corresponding binary environment in which the target program may be executed, so that the target program may be executed in the binary environment that is simulated by the host operating system, and compatibility of the target program in the host operating system is implemented.

However, currently, compatibility technologies of different operating systems are relatively independent; therefore, the foregoing ABI compatibility technology may only implement ABI compatibility of an operating system but may not implement ABI compatibility of multiple different operating systems.

### SUMMARY

Embodiments of the present invention provide a compatibility method and apparatus, which can support ABI compatibility of multiple operating systems and support an existing ABI compatibility technology, and facilitate further extension of multiple ABI compatibility technologies.

To achieve the foregoing objective, the following technical solutions are adopted in the embodiments of the present invention:

According to a first aspect, an embodiment of the present invention provides a compatibility method, including:
if a first target program is a locally registered target program, creating a first process for the first target program;
performing remapping on the first target program;
generating a remapping table, where the remapping table indicates a correspondence between the first target program and the remapped first target program;
loading, according to the remapping table, the remapped first target program into a local memory corresponding to the first process, so as to generate an image of the remapped first target program;
performing reconstruction on the image; and
determining a redirection interface of the reconstructed image, so as to execute the first process.

In a first possible implementation manner of the first aspect, the performing remapping on the first target program specifically includes:
performing segment recombination and/or offset calculation on the first target program.

With reference to the foregoing first aspect or the first possible implementation manner of the first aspect, in a second possible implementation manner, the loading, according to the remapping table, the remapped first target program into a local memory corresponding to the first process, so as to generate an image of the remapped first target program specifically includes:
acquiring a symbol table and a relocation table that are included in the first target program; and
loading the remapped first target program into the local memory according to the remapping table, and performing relocation on the remapped first target program according to the symbol table and the relocation table, so as to generate the image.

With reference to the foregoing first aspect or any implementation manner of the first possible implementation manner to the second possible implementation manner of the first aspect, in a third possible implementation manner, the performing reconstruction on the image includes:
performing image sharing reconstruction and/or binary translation reconstruction on the image.

With reference to the foregoing first aspect or any implementation manner of the first possible implementation manner to the third possible implementation manner of the first aspect, in a fourth possible implementation manner, the determining a redirection interface of the reconstructed image specifically includes:
determining a redirection target of the reconstructed image, where the redirection target is a local interface corresponding to the reconstructed image; and
executing the redirection target so as to determine the redirection interface of the reconstructed image.

With reference to the foregoing first aspect or any implementation manner of the first possible implementation manner to the fourth possible implementation manner of the first aspect, in a fifth possible implementation manner, in a procedure of executing the first process, if the image is missing, the remapped first target program is reloaded into the local memory according to the remapping table, so as to generate the image.

According to a second aspect, an embodiment of the present invention provides a compatibility device, including:
a creating unit, configured to: if a first target program is a locally registered target program, create a first process for the first target program;
a mapping unit, configured to perform remapping on the first target program;
a generating unit, configured to generate a remapping table, where the remapping table indicates a correspondence between the first target program and the remapped first target program;
a loading unit, configured to load, according to the remapping table, the remapped first target program into a local memory corresponding to the first process, so as to generate an image of the remapped first target program;
a processing unit, configured to perform reconstruction on the image; and
the processing unit, further configured to determine a redirection interface of the reconstructed image, so as to execute the first process.

In a first possible implementation manner of the second aspect, where
the mapping unit is specifically configured to perform segment recombination and/or offset calculation on the first target program.

With reference to the second aspect or the first possible implementation manner of the second aspect, in a second possible implementation manner,
the processing unit is specifically configured to acquire a symbol table and a relocation table that are included in the first target program; and
the loading unit is specifically configured to load the remapped first target program into the local memory according to the remapping table, and perform relocation on the remapped first target program according to the symbol table and the relocation table, so as to generate the image.

With reference to the foregoing second aspect or any implementation manner of the first possible implementation manner to the second possible implementation manner of the second aspect, in a third possible implementation manner,
the processing unit is configured to perform image sharing reconstruction and/or binary translation reconstruction on the image.

With reference to the foregoing second aspect or any implementation manner of the first possible implementation manner to the third possible implementation manner of the second aspect, in a fourth possible implementation manner,
the processing unit is specifically configured to determine a redirection target of the reconstructed image and execute the redirection target, so as to determine the redirection interface of the reconstructed image, where the redirection target is a local interface corresponding to the reconstructed image.

With reference to the foregoing second aspect or any implementation manner of the first possible implementation manner to the fourth possible implementation manner of the second aspect, in a fifth possible implementation manner,
the loading unit is further configured to: in a procedure in which the processing unit executes the first process, if the image is missing, reload the remapped first target program into the local memory according to the remapping table, so as to generate the image.

According to the compatibility method and apparatus provided in the embodiments of the present invention, if a first target program is a locally registered target program, a first process is created for the first target program and remapping is performed on the first target program to generate a remapping table, where the remapping table indicates a correspondence between the first target program and the remapped first target program. Then, the remapped first target program is loaded, according to the remapping table, into a local memory corresponding to the first process, so as to generate an image of the remapped first target program, and reconstruction is performed on the image, and a redirection interface of the reconstructed image is determined, so as to execute the first process. According to this solution, if a first target program of a third-party operating system needs to be executed in an operating system of a host computer and the first target program is a target program that has registered with the operating system of the host computer, the foregoing compatibility method may be used to support compatibility of the first target program in the operating system of the host computer, and also support ABI compatibility of multiple operating systems and an existing ABI compatibility technology, and facilitate further extension of multiple ABI compatibility technologies.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a first flowchart of a compatibility method according to an embodiment of the present invention;
FIG. 2 is a second flowchart of a compatibility method according to an embodiment of the present invention;
FIG. 3 is a first schematic structural diagram of a compatibility device according to an embodiment of the present invention;
FIG. 4 is a second schematic structural diagram of a compatibility device according to an embodiment of the present invention;
FIG. 5 is a schematic diagram of an architecture of an ABI compatible interface according to an embodiment of the present invention; and
FIG. 6 is a schematic diagram of an architecture of an ABI compatible state machine according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

### Embodiment 1

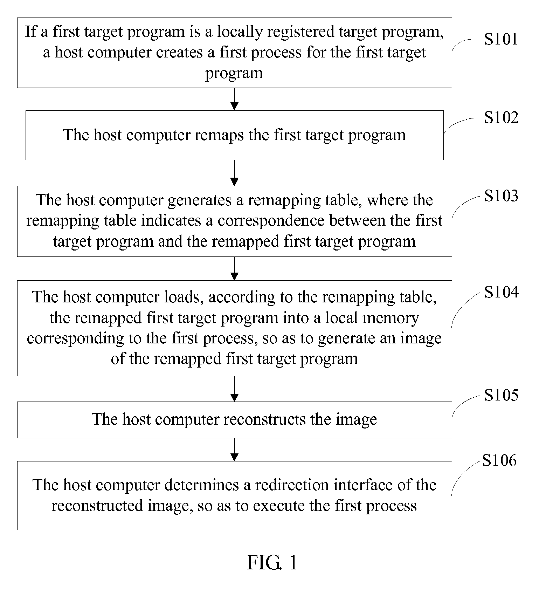

As shown in FIG. 1, an embodiment of the present invention provides a compatibility method, including:
S101. If a first target program is a locally registered target program, a host computer creates a first process for the first target program.

The first target program is a target program in a third-party operating system that is different from an operating system installed in the host computer. The operating system of the host computer and the third-party operating system are different operating systems; therefore, to enable the first target program to be executed in the operating system of the host computer, compatibility of the operating system of the host computer with the first target program needs to be implemented.

Exemplarily, to implement compatibility of the first target program in the operating system of the host computer, the host computer first needs to determine whether the first target program is a locally (that is, the operating system of the host computer) registered target program. If the first target program is a target program that has registered with the operating system of the host computer, the host computer creates the first process for the first target program.

Specially, a "process" is a basis of an operating system structure, is a program that is being executed, is a program instance that is running in a computer, is an entity that may be allocated to a processor and executed by the processor, or is an activity unit that is executed and displayed in a single order and is described by using a current status and a group of related system resources.

It should be noted that the compatibility method provided in this embodiment of the present invention may be an ABI compatibility method. In this method, only the target program that registers with the operating system of the host computer can implement compatibility in the operating system of the host computer, that is, only a third-party operating system that can successfully register an ABI compatibility component of the third-party operating system with the operating system of the host computer can implement compatibility with the operating system of the host computer.
S102. The host computer performs remapping on the first target program.

After the host computer creates the first process for the first target program, the host computer performs the remapping on the first target program. How the host computer performs the remapping on the first target program is described in detail in a subsequent embodiment.

A person of ordinary skill in the art may understand that, an organizational structure of a target program in the operating system of the host computer may be different from an organizational structure of a target program in the third-party operating system; therefore, the host computer maps the target program in the third-party operating system into the target program in the operating system of the host computer so that the organizational structure of the target program in the third-party operating system is the same as the organizational structure of the target program in the operating system of the host computer.
S103. The host computer generates a remapping table, where the remapping table indicates a correspondence between the first target program and the remapped first target program.

In a procedure in which the host computer performs the remapping on the first target program, the host computer may perform the remapping on the first target program while generating the remapping table, that is, a result of the remapping performed by the host computer on the first target program is as follows: an organizational structure of the first target program is the same as the organizational structure of the target program in the operating system of the host computer, and the host computer generates the remapping table corresponding to the remapping procedure, where the remapping table indicates the correspondence between the first target program and the remapped first target program.
S104. The host computer loads, according to the remapping table, the remapped first target program into a local memory corresponding to the first process, so as to generate an image of the remapped first target program.

The host computer loads, according to the remapping table, the remapped first target program into the local memory corresponding to the first process, that is, a memory in the host computer, so as to generate the image of the remapped first target program.

It should be noted that in the computer field, the target program is a binary document stored in a hard disk, and the target program that is loaded from the hard disk into the local memory is referred to as image.

Further, for the compatibility method provided in this embodiment of the present invention, the first process created in S101 is a management structure of a process, that is, the created first process is a program architecture. Only after S104 of loading the remapped first target program into the local memory corresponding to the first process, the first process is a program instance that runs in the memory of the host computer.
S105. The host computer performs reconstruction on the image.

After performing the remapping (that is, preprocessing) on the first target program, the host computer further needs to perform further processing on the first target program that is loaded into the local memory corresponding to the first process, that is, the image of the first target program. That is, the host computer needs to perform the reconstruction on the image of the first target program.

The procedure in which the host computer performs the reconstruction on the image of the first target program is to improve quality and performance of the first target program by adjusting program code of the first target program on the basis of not changing an implementation function of the first target program, so that a design pattern and an architecture of the first target program are more appropriate, thereby improving extensibility and maintainability of the first target program.
S106. The host computer determines a redirection interface of the reconstructed image, so as to execute the first process.

After performing the reconstruction on the image of the first target program, the host computer starts to execute the first process. In a procedure of executing the first process, if a redirection operation appears, the host computer determines the redirection interface of the reconstructed image, so as to continue to execute the first process.

A person of ordinary skill in the art may understand that "redirection" is to re-determine a direction for various requests of a network or a system by using various methods and to switch to a location indicated by the direction. In this embodiment of the present invention, in the procedure in which the host computer executes the first process, if the redirection operation appears, the host computer enters a redirection interface undetermined state. Then, the host computer locally (that is, the operating system of the host computer) determines an interface corresponding to the image of the first target program and switches to execute the interface. Further, the host computer enters a redirection interface determined state, that is, the host computer has determined the redirection interface of the reconstructed image, so as to continue to execute the first process.

Certainly, after the host computer executes the interface, the host computer returns to a place, of the redirection operation, in the first process to continue to execute the first process.

Exemplarily, in the procedure in which the host computer executes the first process, if reaching a place, where there is a function call, in the image of the first target program, the host computer determines, in the system of the host computer, a function that has a same functionality as that of a called function in the image of the first target program, and switches to execute the function, so that the host computer may continue to execute the first process, and after the host computer executes the function, the host computer returns to an address after the function call, so as to continue to execute the first process.

According to the compatibility method provided in this embodiment of the present invention, if a first target program is a locally registered target program, a first process is created for the first target program, and remapping is performed on the first target program to generate a remapping table, where the remapping table indicates a correspondence between the first target program and the remapped first target program. Then, the remapped first target program is loaded, according to the remapping table, into a local memory corresponding to the first process, so as to generate an image of the remapped first target program, and reconstruction is performed on the image, and a redirection interface of the reconstructed image is determined, so as to execute the first process. According to this solution, if a first target program of a third-party operating system needs to be executed in an operating system of a host computer and the first target program is a target program that has registered with the operating system of the host computer, the foregoing compatibility method may be used to support compatibility of the first target program in the operating system of the host computer, and also support ABI compatibility of multiple operating systems and an existing ABI compatibility technology, and facilitate further extension of multiple ABI compatibility technologies.

### Embodiment 2

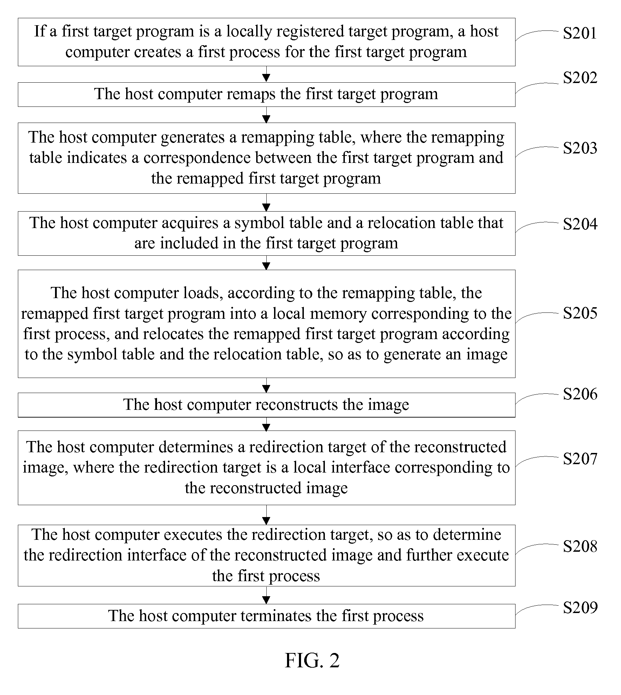

As shown in FIG. 2, an embodiment of the present invention provides a compatibility method, including:
S201. If a first target program is a locally registered target program, a host computer creates a first process for the first target program.

The first target program is a target program in a third-party operating system that is different from an operating system installed in the host computer. The operating system of the host computer and the third-party operating system are different operating systems; therefore, to enable the first target program to be executed in the operating system of the host computer, compatibility of the operating system of the host computer with the first target program needs to be implemented.

Exemplarily, to implement compatibility of the first target program in the operating system of the host computer, the host computer first needs to determine whether the first target program is a locally (that is, the operating system of the host computer) registered target program. If the first target program is a target program that has registered with the operating system of the host computer, the host computer creates the first process for the first target program.

It should be noted that the compatibility method provided in this embodiment of the present invention may be an ABI compatibility method. In this method, only the target program that registers with the operating system of the host computer can implement compatibility in the operating system of the host computer, that is, only a third-party operating system that can successfully register an ABI compatibility component of the third-party operating system with the operating system of the host computer can implement compatibility with the operating system of the host computer.
S202. The host computer performs remapping on the first target program.

A person of ordinary skill in the art may understand that, an organizational structure of a target program in the operating system of the host computer may be different from an organizational structure of a target program in the third-party operating system; therefore, the host computer maps the target program in the third-party operating system into the target program in the operating system of the host computer so that the organizational structure of the target program in the third-party operating system is the same as the organizational structure of the target program in the operating system of the host computer.

In this embodiment of the present invention, a method for performing the remapping by the host computer on the first target program specifically includes the following:

The host computer performs segment recombination and/or offset calculation on the first target program. Specifically, the organizational structure of the target program in the operating system of the host computer may be different from the organizational structure of the target program in the third-party operating system; therefore, in a procedure in which the host computer performs the remapping on the first target program, Storage addresses need to be re-allocated to all program code segments in the first target program, that is, the segment recombination is performed on all the program code segments in the first target program. The storage addresses of all the program code segments on which the segment recombination is performed change; therefore, the host computer further needs to perform calculation on offset addresses of all the program code segments on which the segment recombination is performed, so that the host computer may correctly execute all the program code segments with adjusted storage addresses.

It should be noted that because of a difference of each operating system, when performing the remapping on the first target program, the host computer may only need to perform the segment recombination on all the program code segments in the first target program or may only need to perform the offset calculation on all the program code segments in the first target program, or may not only need to perform the segment recombination on all the program code segments in the first target program, but also need to perform the offset calculation on all the program code segments in the first target program. A specific remapping procedure may be adaptively adjusted according to a requirement of a different operating system, which is not limited in the present invention.
S203. The host computer generates a remapping table, where the remapping table indicates a correspondence between the first target program and the remapped first target program.

In a procedure in which the host computer performs the remapping on the first target program, the host computer may perform the remapping on the first target program while generating the remapping table, that is, a result of the remapping performed by the host computer on the first target program is as follows: an organizational structure of the first target program is the same as the organizational structure of the target program in the operating system of the host computer, and the host computer generates the remapping table corresponding to the remapping procedure, that is, the remapping table indicates the correspondence between the first target program and the remapped first target program.
S204. The host computer acquires a symbol table and a relocation table that are included in the first target program.

The host computer acquires the corresponding symbol table and relocation table from the first target program.

In the computer field, the "symbol table" is a table in which related information, such as a type and a feature of some grammatical symbols in a source program, is constantly collected, recorded and used in a source program compilation procedure. The symbol table includes a constant table, a variable name table, an array name table, a procedure name table, a label table and the like, which are referred to as the symbol table. In addition, organization, a structure and a management method of the symbol table may directly affect working efficiency of a compilation system.

Accordingly, the "relocation table" is a table that is generated when a computer performs relocation on a target program in a target program linking procedure and is used to indicate a correspondence between a logical address of the target program and a physical address, in a memory of the computer, of the target program. "Relocation" is a procedure in which logical address space of the target program is transformed into physical address space, in the memory of the compute, of the target program.

It should be noted that the symbol table and the relocation table are respectively generated in the source program compilation procedure and the target program linking procedure and included in the first target program.
S205. The host computer loads, according to the remapping table, the remapped first target program into a local memory corresponding to the first process, and performs relocation on the remapped first target program according to the symbol table and the relocation table, so as to generate an image.

The host computer loads, according to the remapping table, the remapped first target program into the local memory corresponding to the first process, that is, a memory in the host computer, and performs the relocation on the remapped first target program according to the symbol table and the relocation table, so as to generate the image corresponding to the first target program.

In this embodiment of the present invention, the host computer performs the relocation on a variable in the first target program according to the symbol table and the relocation table, so as to generate the image that may be executed and is corresponding to the first target program.

A person of ordinary skill in the art may understand that, a storage address of the variable in the first target program before the relocation is a logical address while a storage address of a variable in the first target program after the relocation is a physical addresses in the memory of the computer.

It should be noted that in the computer field, the target program is a binary document stored in a hard disk, and the target program that is loaded from the hard disk into the local memory is referred to as image.

Further, a "process" is a basis of an operating system structure, is a program that is being executed, is a program instance that is running in a computer, is an entity that may be allocated to a processor and executed by the processor, or is an activity unit that is executed and displayed in a single order and is described by using a current status and a group of related system resources. For the compatibility method provided in this embodiment of the present invention, the first process created in S201 is a management structure of a process, that is, the created first process is a program architecture of a process. Only after S205 of loading the remapped first target program into the memory in the host computer corresponding to the first process, the first process is a program instance that runs in the memory of the host computer.
S206. The host computer performs reconstruction on the image.

After performing the remapping (that is, preprocessing) on the first target program, the host computer further needs to perform further processing on the first target program that is loaded into the local memory corresponding to the first process, that is, the host computer performs the reconstruction on the image of the first target program.

The procedure in which the host computer performs the reconstruction on the image of the first target program is to improve quality and performance of the first target program by adjusting program code of the first target program on the basis of not changing an implementation function of the first target program, so that a design pattern and an architecture of the first target program are more appropriate, thereby improving extensibility and maintainability of the first target program.

In this embodiment of the present invention, when the host computer performs the reconstruction on the image of the first target program, two aspects of requirements, image sharing and binary translation, need to be considered, that is, the host computer may need to perform image sharing reconstruction and/or binary translation reconstruction on the image of the first target program.

Exemplarily, in an image sharing procedure, a segment of program code or a segment of data that is shared by two or more target programs and is in the memory of the computer needs to be directed to a fixed location; therefore, when the image sharing is performed on the image of the first target program and an image of another target program, the host compute needs to perform the reconstruction, that is, the image sharing reconstruction on the image of the first target program.

"Binary translation" is a technology in which an executable binary program is directly translated, and an binary program in a processor can be translated and executed in another processor, so that binary programs of different processors can be easily migrated to each other, and applicable scope of hardware/software is enlarged.

If the third-party operating system and the operating system of the host computer are different instruction systems, the host computer needs to perform the binary translation on the image of the first target program. In the procedure of the binary translation, the host computer needs to perform the reconstruction, that is, the binary translation reconstruction on the image of the first target program, so as to rearrange the image.

It should be noted that, under different requirements, manners in which the host computer performs the reconstruction on the image of the first target program are different. The host computer may perform the image sharing reconstruction on the image of the first target program or may perform the binary translation reconstruction on the image of the first target program, or may not only perform the image sharing reconstruction on the image of the first target program, but also perform the binary translation reconstruction on the image of the first target program. A specific reconstruction manner may be adaptively adjusted according to an actual requirement of a different operating system, which is not limited in the present invention.
S207. The host computer determines a redirection target of the reconstructed image, where the redirection target is a local interface corresponding to the reconstructed image.

After performing the reconstruction on the image of the first target program, the host computer starts to execute the first process. In a procedure of executing the first process, if a redirection operation appears, the host computer determines the redirection target of the reconstructed image, so as to continue to execute the first process.

A person of ordinary skill in the art may understand that "redirection" is to re-determine a direction for various requests of a network or a system by using various methods and to switch to a location indicated by the direction. In this embodiment of the present invention, in the procedure in which the host computer executes the first process, if the redirection operation appears, the host computer enters a redirection interface undetermined state. Then, the host computer locally (that is, in the operating system of the host computer) determines an interface corresponding to the image of the first target program, that is, determines the redirection target.
S208. The host computer executes the redirection target so as to determine the redirection interface of the reconstructed image and further execute the first process.

After determining the redirection target, the host computer switches to execute the redirection target. Further, the host computer enters a redirection interface determined state, that is, the host computer has determined the redirection interface of the reconstructed image, so as to continue to execute the first process.

Certainly, if the host computer has executed the redirection target, the host computer returns to a place of the redirection operation in the first process to continue to execute the first process.

Exemplarily, in the procedure in which the host computer executes the first process, if reaching a place, where there is a function call, in the image of the first target program, the host computer determines, in the system of the host computer, a function that has a same functionality as that of a called function in the image of the first target program, and switches to execute the function, so that the host computer may continue to execute the first process, and after the host computer executes the function, the host computer returns to an address after the function call, so as to continue to execute the first process.

Further, in the procedure of executing the first process, if the image of the first target program is missing, the host computer reloads the remapped first target program into the first process according to the remapping table, so as to generate the image and further to execute the first process again.
S209. The host computer terminates the first process.

A case in which the host computer terminates the first process is any one of the following:
(1) After the host computer executes the first process, the host computer terminates the first process.
(2) When the host computer does not successfully load the first process, the host computer terminates the first process.
(3) When the host computer does not successfully determine the redirection interface of the image of the first target program, the host computer terminates the first process.

In the foregoing, (1) is a normal termination after the first process is executed, however (2) and (3) are both abnormal terminations in the procedure of executing the first process.

Specially, if the first target program in S201 is not a target program that has registered with the operating system of the host computer, that is, the first target program cannot implement compatibility in the operating system of the host computer; therefore, the host computer directly terminates a compatibility procedure for the first target program.

It should be noted that, the foregoing S201 to S209 is a complete procedure of implementing compatibility of the first target program in the third-party operating system implements in the operating system of the host computer. However, for a compatibility instruction and a file format of the first target program, in the procedure of implementing the compatibility of the first target program, all these steps do not necessarily need to be performed. In the compatibility method provided in this embodiment of the present invention, the ABI compatibility component that is of the third-party operating system and registers with the operating system of the host computer may perform a mandatory step according to an actual requirement, and for a step that does not need to be performed, an instruction corresponding to the step may be set to be empty.

According to the compatibility method provided in this embodiment of the present invention, if a first target program is a locally registered target program, a first process is created for the first target program, and remapping is performed on the first target program to generate a remapping table, where the remapping table indicates a correspondence between the first target program and the remapped first target program. Then, the remapped first target program is loaded, according to the remapping table, into a local memory corresponding to the first process, so as to generate an image of the remapped first target program, and reconstruction is performed on the image, and a redirection interface of the reconstructed image is determined, so as to execute the first process. According to this solution, if a first target program of a third-party operating system needs to be executed in an operating system of a host computer and the first target program is a target program that has registered with the operating system of the host computer, the foregoing compatibility method may be used to support compatibility of the first target program in the operating system of the host computer, and also support ABI compatibility of multiple operating systems and an existing ABI compatibility technology, and facilitate further extension of multiple ABI compatibility technologies.

### Embodiment 3

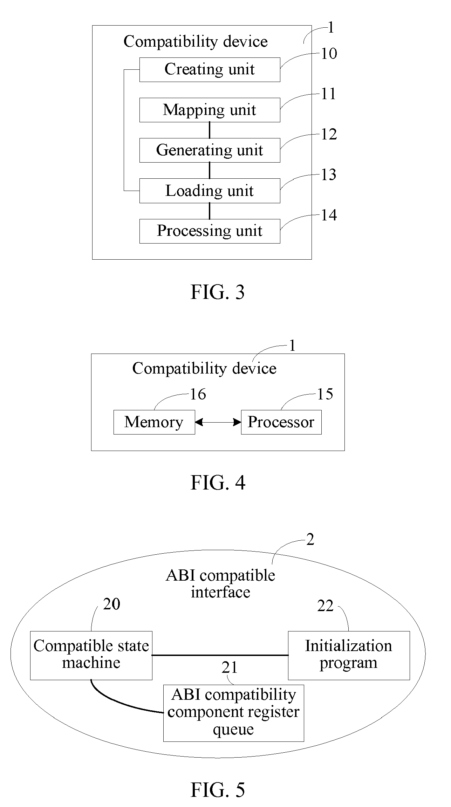

As shown in FIG. 3, an embodiment of the present invention provides a compatibility device 1, including:
a creating unit 10, configured to: if a first target program is a locally registered target program, create a first process for the first target program;
a mapping unit 11, configured to perform remapping on the first target program;
a generating unit 12, configured to generate a remapping table, where the remapping table indicates a correspondence between the first target program and the remapped first target program;
a loading unit 13, configured to load, according to the remapping table, the remapped first target program into a local memory corresponding to the first process, so as to generate an image of the remapped first target program; and
a processing unit 14, configured to perform reconstruction on the image.

The processing unit 14 is further configured to determine a redirection interface of the reconstructed image, so as to execute the first process.

Further, the mapping unit 11 is specifically configured to perform segment recombination and/or offset calculation on the first target program.

Further, the processing unit 14 is specifically configured to acquire a symbol table and a relocation table that are included in the first target program.

The loading unit 13 is specifically configured to load the remapped first target program into the local memory according to the remapping table, and perform relocation on the remapped first target program according to the symbol table and the relocation table, so as to generate the image.

Further, the processing unit 14 is configured to perform image sharing reconstruction and/or binary translation reconstruction on the image.

Further, the processing unit 14 is specifically configured to determine a redirection target of the reconstructed image and execute the redirection target, so as to determine the redirection interface of the reconstructed image, where the redirection target is a local interface corresponding to the reconstructed image.

Further, the loading unit 13 is further configured to: in a procedure of executing the first process by the processing unit 14, if the image is missing, reload the remapped first target program into the local memory according to the remapping table, so as to generate the image.

According to the compatibility device provided in this embodiment of the present invention, if a first target program is a locally registered target program, the compatibility device creates a first process for the first target program and performs remapping on the first target program to generate a remapping table, where the remapping table indicates a correspondence between the first target program and the remapped first target program. Then, the compatibility device loads, according to the remapping table, the remapped first target program into a local memory corresponding to the first process, so as to generate an image of the remapped first target program, performs reconstruction on the image, and determines a redirection interface of the reconstructed image, so as to execute the first process. According to this solution, if a first target program of a third-party operating system needs to be executed in an operating system of a host computer and the first target program is a target program that has registered with the operating system of the host computer, a compatibility method provided in an embodiment of the present invention may be performed by using the foregoing compatibility device so as to support compatibility of the first target program in the operating system of the host computer, and also support ABI compatibility of multiple operating systems and an existing ABI compatibility technology, and facilitate further extension of multiple ABI compatibility technologies.

### Embodiment 4

As shown in FIG. 4, an embodiment of the present invention provides a compatibility device 1, which includes a processor 15 and a memory 16.

The processor 15 is a control and processing center of the compatibility device 1, and runs a software program stored in the memory 16 and invokes and processes data stored in the memory 16 so as to control the compatibility device to perform a corresponding operation, and implement another function of the compatibility device.

The memory 16 may be configured to store the software program and the data, so that the processor 15 may run the software program stored in the memory 16 so as to implement the corresponding operation of the compatibility device and another function.

Corresponding to a compatibility method provided in an embodiment of the present invention,

the processor 15 is configured to: if a first target program is a locally registered target program, create a first process for the first target program and store the first process in the memory 16; perform remapping on the first target program, generate a remapping table, and store the remapping table in the memory 16, where the remapping table indicates a correspondence between the first target program and the remapped first target program; load, according to the remapping table, the remapped first target program into a local memory corresponding to the first process, so as to generate an image of the remapped first target program; perform reconstruction on the image; and further determine a redirection interface of the reconstructed image, so as to execute the first process.

Further, the processor 15 is specifically configured to perform segment recombination and/or offset calculation on the first target program.

Further, the processor 15 is specifically configured to acquire a symbol table and a relocation table that are included in the first target program, load, according to the remapping table, the remapped first target program into the local memory corresponding to the first process in the memory 16, and perform relocation on the remapped first target program according to the symbol table and the relocation table, so as to generate the image.

Further, the processor 15 is configured to perform image sharing reconstruction and/or binary translation reconstruction on the image.

Further, the processor 15 is specifically configured to determine a redirection target of the reconstructed image in the memory 16 and execute the redirection target, so as to determine the redirection interface of the reconstructed image, where the redirection target is a local interface corresponding to the reconstructed image.

Further, the processor 15 is further configured to: in a procedure of executing the first process, if the image in the memory 15 is missing, reload, according to the remapping table the remapped first target program into the local memory corresponding to the first process in the memory 16, so as to generate the image.

According to the compatibility device provided in this embodiment of the present invention, if a first target program is a locally registered target program, the compatibility device creates a first process for the first target program and performs remapping on the first target program to generate a remapping table, where the remapping table indicates a correspondence between the first target program and the remapped first target program. Then, the compatibility device loads, according to the remapping table, the remapped first target program into a local memory corresponding to the first process, so as to generate an image of the remapped first target program, performs reconstruction on the image, and determines a redirection interface of the reconstructed image, so as to execute the first process. According to this solution, if a first target program of a third-party operating system needs to be executed in an operating system of a host computer and the first target program is a target program that has registered with the operating system of the host computer, a compatibility method provided in an embodiment of the present invention may be performed by using the foregoing compatibility device so as to support compatibility of the first target program in the operating system of the host computer, and also support ABI compatibility of multiple operating systems and an existing ABI compatibility technology, and facilitate further extension of multiple ABI compatibility technologies.

The following further describes from a software perspective an organizational architecture and an implementation manner of a corresponding software program that is executed, in a compatibility procedure, by the compatibility device 1 provided in this embodiment of the present invention.

As shown in FIG. 5, FIG. 5 is a diagram of an organizational architecture of an ABI compatible interface 2 that is executed, in the compatibility procedure, by the compatibility device 1 provided in this embodiment of the present invention, and the compatible interface 2 includes a compatible state machine 20, an ABI compatibility component register queue 21 and an initialization program 22.

The compatible state machine 20 defines a set of transform flows (that is, a compatibility procedure) of the first target program in the operating system of the host computer. By using the transform flows, the operating system of the host computer transforms the first target program into the image of the first target program that may be executed in the operating system of the host computer, and executes the image of the first target program in the operating system of the host computer.

The ABI compatibility component register queue 21 is a structure that is configured to register the compatibility component of the third-party operating system. An ABI compatibility component corresponding to each compatible third-party operating system is stored in the ABI compatibility component register queue 21, and the compatibility component is determined by the compatible state machine 20.

The initialization program 22 is responsible for starting the compatible state machine 20, that is, the initialization program 22 first checks whether the first target program is a target program that has registered with the operating system of the host computer. If yes, it indicates that the first target program can implement compatibility in the operating system of the host computer, and then the initialization program 22 starts the compatible state machine 20.

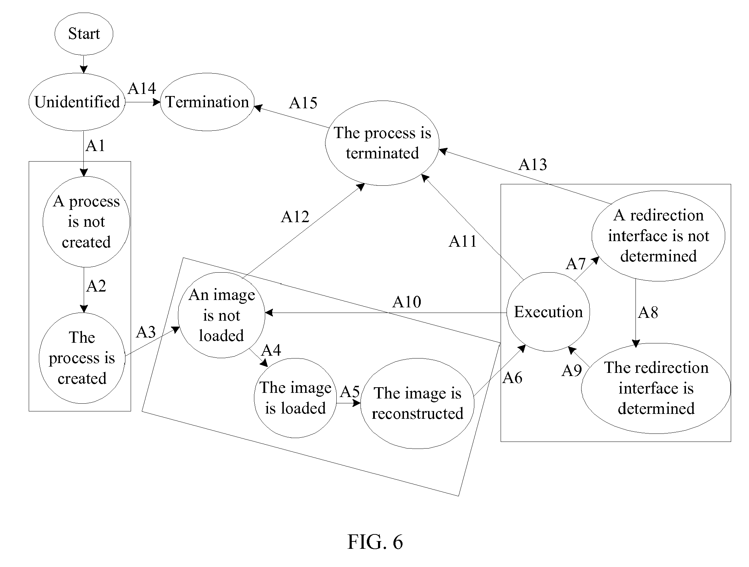

As shown in FIG. 6, FIG. 6 is a schematic diagram of an architecture of the ABI compatible state machine 20 according to this embodiment of the present invention.

The compatible state machine 20 shown in FIG. 6 consists of 12 states, which are shown as state 1-state 12, and the 12 states respectively represent all independent steps in the ABI compatibility procedure. Switching among the 12 states corresponds to 15 execution actions which are shown as A1-A15. The following specifically describes a workflow of the whole compatible state machine 20, that is, a whole procedure in which the compatible state machine 20 completes the compatibleness.

### State 1: Unidentified

If a user terminal starts a first target program of a third-party operating system, the operating system of the host computer enters a first target program unidentified state.

### A1: Identification of the first target program

The host computer that runs an initialization program traverses target program identification actions of all registered ABI components, so as to identify the first target program.

### State 2: The first process is not created.

If the first target program is successfully identified, the operating system of the host computer enters a first process not created state.

### A2: Creation of the first process

If the first target program is successfully identified, the host computer creates the first process for the first target program.

### State 3: The operating system of the host computer enters a first process created state.

### A3: Image preprocessing

The host computer performs remapping on the first target program.

### State 4: The image is not loaded.

### A4: Image loading

The host computer loads, according to a remapping relationship between the first target program of the third-party operating system and the target program of the operating system of the host computer, the remapped first target program into the memory that is of the host computer and is corresponding to the first process. In this procedure, the host computer needs to perform redirection operation on the first target program. The first target program loaded into the memory is called image.

### State 5: The image is loaded.

### A5: Image reconstruction

The host computer performs a corresponding reconstruction operation on the remapped image, such as the image sharing reconstruction and/or the binary translation reconstruction.

### State 6: The image is reconstructed.

### A6: Execution

The host computer executes the first process.

### State 7: Execution.

The operating system of the host computer enters a state of executing the first process.

### A7: Detection of the redirection interface

In the procedure of executing the first process, if the redirection operation appears, the operating system of the host computer enters a redirection interface undetermined state.

### State 8: The redirection interface is not determined.

### A8: Determining of the redirection interface

The host computer determines the redirection target and switches to execute a target program that is in the operating system of the host computer and is corresponding to the first target program of the third-party operating system.

### State 9: The redirection interface is determined.

### A9: Recovery of the execution

### State 10: Execution

The host computer continues to execute the foregoing first process.

### A10: Missing of image content

In the procedure of executing the first process, if the image content is missing, the operating system of the host computer enters an image unloaded state again.

### State 11: The first process is terminated.

After the host computer executes the first process, the host computer terminates the first process.

### A11: Normal termination

### State 12: Termination.

The host computer terminates running of the first target program.

### A12: Abnormal termination 1

If the host computer does not successfully load the image, the host computer terminates the first process.

### A13: Abnormal termination 2

If the host computer does not successfully determine the redirection interface, the host computer terminates the first process.

### A14: Abnormal termination 3

If the first target program is not a target program that has registered with the operating system of the host computer, that is, the host computer does not successfully identify the first target program, the host computer terminates the first process.

### A15: Termination

The host computer terminates running of the first target program.

As shown in chart 1, the ABI compatible interface 2 corresponds to a complete compatibility procedure of the compatible state machine 20, that is, the ABI compatible interface 2 corresponds to the compatibility method provided in this embodiment of the present invention.

**Table 1**

| | | | |
|---|---|---|---|
| A1 | Identification of the first target program | A9 | Recovery of execution |
| A2 | Creation of the first process | A10 | Missing of the image content |
| A3 | Image preprocessing | A11 | Normal termination |
| A4 | Image loading | A12 | Abnormal termination 1 |
| A5 | Image reconstruction | A13 | Abnormal termination 2 |
| A6 | Execution | A14 | Abnormal termination 3 |
| A7 | Detection of the redirection interface | A15 | Termination |
| A8 | Determining of the redirection interface | | |

The ABI compatible interface 2 shown in table 1 is equivalent to provide a structure. Each member of the structure is a corresponding function. Each third-party operating system that needs to be compatible with the operating system of the host computer needs to implement a corresponding structure and register the structure into the ABI compatibility component register queue 21. In the compatibility procedure, the compatible state machine 20 implements the various compatibility procedures by executing a function that is provided by the ABI compatibility component provided by the third-party operating system, and further supports running of the first target program in the operating system of the host computer, that is, supports and implements compatibility of the first target program in the operating system of the host computer.

Further, to enable the first target program in the third-party operating system to implement the compatibility in the operating system of the host computer, registration of the ABI compatibility component of the third-party operating system first needs to be completed.

A registration procedure of the ABI compatibility component is as follows:
(1) The operating system of the host computer provides a segment of space for the ABI compatible interface, so as to store each ABI compatibility component.
(2) The operating system of the host computer provides a registration functional module, so as to support registration of the corresponding ABI compatibility component by the third-party operating system.
(3) An instruction adds information of the ABI compatibility component of the third-party operating system into an ABI compatibility component register queue, so as to complete a registration work of the ABI compatibility component of the third-party operating system in the operating system of the host computer.

It should be noted that, to ensure that the first target program runs normally in the operating system of the host computer, the operating system of the host computer needs to provide a compatible API (Application Programming Interface, application programming interface), compatible dynamic link library, and compatible first target program processing flow for the first target program. Therefore, in a procedure in which the operating system of the host computer performs completion of compatibility of the ABI compatible interface with the first target program, the operating system of the host computer first needs to import a necessary file such as the dynamic link library corresponding to the third-party operating system into the system. In addition, the operating system of the host computer performs the registration of the ABI compatibility component of the third-party operating system.

Exemplarily, the following describes of an implementation procedure of the compatibility method provided in this embodiment of the present invention by using cross-version compatibility of a Linux operating system and compatibility of the third-party operating system with the ABI of a Linux operating system as examples.

### Cross-version compatibility of the Linux operating system:

A main reason why binary programs are not compatible among different versions of the Linux operating system is that a higher version Linux operating system modifies the API and a data structure of the Linux operating system for some reasons, and as a result, a first target program in an original lower version Linux operating system cannot directly run in the higher version Linux operating system. FIG. 2 shows an ABI compatible interface that is required when cross-version compatibility of the Linux operating system is implemented by using the compatibility method provided in this embodiment of the present invention.

Executable files in the Linux operating system are all in an executable and linking format (Executable and Linking Format, executable and linking format); therefore, an ABI compatible interface by using which the lower version Linux operating system performs compatibility in the higher version Linux operating system may be greatly simplified, that is, many operations in the ABI compatible interface may be empty, such as executable file identification and executable file loading. For the cross-version compatibility of the Linux operating system, only A9, that is, an operation of the redirection interface in the corresponding ABI compatible interface needs to be modified. A reason why the lower version Linux operating system is not compatible with the higher version Linux operating system is that the API of the Linux operating system is changed; therefore, direct running of the first target program of the lower version Linux operating system in the higher version Linux operating system may be implemented only by providing an API corresponding to the original lower version Linux operating system for the higher version Linux operating system and in a dynamic link procedure, redirecting a call of the first target program running in the higher version Linux operating system to the API of the original lower version Linux operating system, that is, compatibility of the higher version Linux operating system with the lower version Linux operating system may be implemented.

**Table 2**

| | | | |
|---|---|---|---|
| A1 | Empty | A9 | Empty |
| A2 | Fork function | A10 | Missing of image content |
| A3 | Family of exec functions | A11 | Normal termination |
| A4 | Function loading | A12 | Abnormal termination 1 |
| A5 | Empty | A13 | Abnormal termination 2 |
| A6 | Empty | A14 | Empty |
| A7 | dlsym function start | A15 | Empty |
| A8 | dlsym function | | |

Compatibility of another operating system with the ABI of the Linux operating system:

A common practice to implement compatibility of the ABI of the Linux operating system in the another operating system is to implement, in the another operating system, an API that is compatible with the Linux operating system. In this case, the corresponding ABI compatible interface is shown in table 1.

A procedure of implementing the compatibility of the ABI of the Linux operating system in the another operating system (for a better description, the another system is referred to as an operating system of a host computer hereinafter) includes the following:
(1) The host computer checks whether a file format ELF of a first target program is a file format that has been registered in the operating system of the host computer.
   It may be understood that the first target program in step (1) is a target program in the Linux operating system.
(2) If the file format ELF of the first target program is a file format that has been registered in the operating system of the host computer, the host computer creates a first process for the first target program in the operating system of the host computer.
(3) The host computer performs remapping on the first target program and generates a remapping table that indicates a mapping relationship between a first target program and a target program in the operating system of the host computer.
   It should be noted that, if a file format of the target program in the operating system of the host computer is a class ELF, that is, the operating system of the host computer is an executable environment of the class ELF, the foregoing step (3) may be omitted.
(4) The host computer loads, according to the foregoing generated remapping table, into a memory that is of the host computer and is corresponding to the first process, and meanwhile performs relocation on the first target program so as to generate an image of the remapped first target program.
(5) The host computer performs reconstruction on the foregoing image.
   It should be noted that if an operation of sharing a segment of program is performed on the foregoing image and another image, an image sharing reconstruction operation needs to be performed on the foregoing image; if binary translation needs to be performed on the foregoing image, in a procedure of performing the binary translation, an binary translation reconstruction operation needs to be performed on the foregoing image, so as to complete the reconstruction of the foregoing image.
   Specially, if a format of the target program in the operating system of the host computer is compatible with a format of the first target program in the Linux operating system; an instruction system of the operating system of the host computer is the same as that of the Linux operating system; image sharing does not exist between the foregoing image and the another image; the binary translation does not need to be performed on the foregoing image; the foregoing step (5) may be omitted. On the contrary, if the image sharing exists between the foregoing image and the another image, or the binary translation needs to be performed on the foregoing image, the foregoing step (5) may not be omitted.
(6) The host computer performs a redirection interface operation on the reconstructed image, so as to execute the first process.

In this step, the host computer needs to correspond a function call of the first target program in the Linux operating system to an API that is corresponding to the Linux operating system and is implemented in the operating system of the host computer, only in this case, the first process can be successfully executed.

At this point, step (1) to step (6) completes a procedure in which the another operating system implements compatibility with the ABI of the Linux operating system.

The ABI compatible interface that runs in the compatibility device and is provided in this embodiment of the present invention is configured to implement compatibility with an existing process-level ABI compatibility technology, and facilitates further extension of an ABI of a different operating system. By using this ABI compatible interface, the operating system of the host computer can conveniently extend an execution environment of the ABI of a third-party operating system and can greatly implement compatibility with an existing target program and reduces modification of the operating system of the host computer.

Further, the ABI compatibility component register queue provided in the embodiment of the present invention is configured to enable the third-party operating system to register the corresponding ABI compatibility component in the operating system of the host computer. By using this ABI compatibility component register queue, the third-party operating system may implement compatibility of the target program of the third-party operating system in the operating system of the host computer as long as the third-party operating system implements an ABI compatibility component corresponding to the third-party operating system.

It may be clearly understood by persons skilled in the art that, for the purpose of convenient and brief description, only the division of the foregoing functional modules is described by using an example, and in an actual application, the foregoing functions may be accomplished by different functional modules according to a requirement, that is, the inner structure of the apparatus is divided into different functional modules to accomplish all or some of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module or unit division is merely a logical function division and may be other divisions in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The computer software product is stored in a storage medium and includes several instructions for instructing a computer device (which may be a personal computer, a server, a network device, or the like) or a processor (processor) to perform all or a part of the steps of the methods described in the embodiments of the present invention. The storage medium includes: any medium that can store program codes, such as a USB flash disk, a removable hard disk, a read-only memory (Read-Only Memory, ROM), a random access memory (Random Access Memory, RAM), a magnetic disk, or an optical disk.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A compatibility method, comprising:
if a first target program is a locally registered target program, creating a first process for the first target program;
performing remapping on the first target program;
generating a remapping table, wherein the remapping table indicates a correspondence between the first target program and the remapped first target program;
loading, according to the remapping table, the remapped first target program into a local memory corresponding to the first process, so as to generate an image of the remapped first target program;
performing reconstruction on the image; and
determining a redirection interface of the reconstructed image, so as to execute the first process.

2. The compatibility method according to claim 1, wherein the performing remapping on the first target program specifically comprises:
performing segment recombination and/or offset calculation on the first target program.

3. The compatibility method according to claim 1 or 2, wherein the loading, according to the remapping table, the remapped first target program into a local memory corresponding to the first process, so as to generate an image of the remapped first target program specifically comprises:
acquiring a symbol table and a relocation table that are comprised in the first target program; and
loading the remapped first target program into the local memory according to the remapping table, and performing relocation on the remapped first target program according to the symbol table and the relocation table, so as to generate the image.

4. The compatibility method according to any one of claims 1 to 3, wherein the performing reconstruction on the image comprises:
performing image sharing reconstruction and/or binary translation reconstruction on the image.

5. The compatibility method according to any one of claims 1 to 4, wherein the determining a redirection interface of the reconstructed image specifically comprises:
determining a redirection target of the reconstructed image, wherein the redirection target is a local interface corresponding to the reconstructed image; and
executing the redirection target so as to determine the redirection interface of the reconstructed image.

6. The compatibility method according to any one of claims 1 to 5, wherein in a procedure of executing the first process, if the image is missing, the remapped first target program is reloaded into the local memory according to the remapping table, so as to generate the image.

7. A compatibility device, comprising:
a creating unit, configured to: if a first target program is a locally registered target program, create a first process for the first target program;
a mapping unit, configured to perform remapping on the first target program;
a generating unit, configured to generate a remapping table, wherein the remapping table indicates a correspondence between the first target program and the remapped first target program;
a loading unit, configured to load, according to the remapping table, the remapped first target program into a local memory corresponding to the first process, so as to generate an image of the remapped first target program;
a processing unit, configured to perform reconstruction on the image; and
the processing unit, further configured to determine a redirection interface of the reconstructed image, so as to execute the first process.

8. The compatibility device according to claim 7, wherein:
the mapping unit is specifically configured to perform segment recombination and/or offset calculation on the first target program.

9. The compatibility device according to claim 7 or 8, wherein:
the processing unit is specifically configured to acquire a symbol table and a relocation table that are comprised in the first target program; and
the loading unit is specifically configured to load the remapped first target program into the local memory according to the remapping table, and perform relocation on the remapped first target program according to the symbol table and the relocation table, so as to generate the image.

10. The compatibility device according to any one of claims 7 to 9, wherein:
the processing unit is configured to perform image sharing reconstruction and/or binary translation reconstruction on the image.

11. The compatibility device according to any one of claims 7 to 10, wherein:
the processing unit is specifically configured to determine a redirection target of the reconstructed image and execute the redirection target, so as to determine the redirection interface of the reconstructed image, wherein the redirection target is a local interface corresponding to the reconstructed image.

12. The compatibility device according to any one of claims 7 to 11, wherein:
the loading unit is further configured to: in a procedure in which the processing unit executes the first process, if the image is missing, reload the remapped first target program into the local memory according to the remapping table, so as to generate the image.
